# EUROPEAN PATENT SPECIFICATION

(11) **EP 1 907 922 B1**
(45) Date of publication and mention of the grant of the patent: **28.02.2018**
(21) Application number: 06761163.2
(22) Date of filing: 21.07.2006
(51) Int. Cl.: G06F 7/00, G06F 7/02, G06F 12/02, G06F 17/30

(54) **A METHOD FOR DETECTING STATE CHANGES BETWEEN DATA STORED IN A FIRST COMPUTING DEVICE AND DATA RECEIVED FROM A SECOND COMPUTING DEVICE**
VERFAHREN ZUM DETEKTIEREN VON ZUSTANDSÄNDERUNGEN ZWISCHEN IN EINER ERSTEN DATENVERARBEITUNGSEINRICHTUNG GESPEICHERTEN DATEN UND AUS EINER ZWEITEN DATENVERARBEITUNGSEINRICHTUNG EMPFANGENEN DATEN
PROCÉDÉ PERMETTANT DE DETECTER DES CHANGEMENTS D'ETAT ENTRE DES DONNÉES STOCKÉES SUR UN PREMIER DISPOSITIF INFORMATIQUE ET DES DONNÉES PROVENANT D'UN SECOND DISPOSITIF INFORMATIQUE

(30) Priority: 22.07.2005 CA 2513010
(43) Date of publication of application: 09.04.2008
(73) Proprietor: BlackBerry Limited, Waterloo, ON N2K 0A7 (CA)
(72) Inventor: KNOWLES, Michael, Waterloo, Ontario N2T 2X5 (CA); TAPUSKA, David, Waterloo, Ontario N2T 2T7 (CA); KALOUGINA, Tatiana, Waterloo, CA N2L 5H3 (CA)
(74) Representative: MERH-IP Matias Erny Reichl Hoffmann Patentanwälte PartG mbB
(86) International application number: PCT/CA2006/001202
(87) International publication number: WO 2007/009254

(56) References cited:
- EP-A1- 1 154 356
- US-A- 5 864 837
- US-A1- 2001 027 450
- US-A1- 2003 120 647
- US-A1- 2004 220 975
- US-A1- 2005 050 461
- US-B1- 6 286 032
- WILLIAM H COLLINS OF ERICSSON ET AL: "Method of recognizing duplicates in received information" RESEARCH DISCLOSURE, MASON PUBLICATIONS, HAMPSHIRE, GB, vol. 440, no. 45, 1 December 2000 (2000-12-01), XP007127230 ISSN: 0374-4353

## Description

### Field

This specification relates generally to mobile data communication systems, and more particularly to a method for detecting state changes between data stored in a first computing device and data retrieved from a second computing device.

### Background

Mobile communication devices are becoming increasingly popular for business and personal use due to a relatively recent increase in number of services and features that the devices and mobile infrastructures support. Handheld mobile communication devices, sometimes referred to as mobile stations, are essentially portable computers having wireless capability, and come in various forms. These include Personal Digital Assistants (PDAs), cellular phones and smart phones.

It is known in the art to provide Internet browser functionality in such mobile communication devices. In operation, a browser user-agent in the handheld mobile communication device issues commands to an enterprise or proxy server implementing a Mobile Data Service (MDS), which functions as an acceleration server for browsing the Internet and transmitting text and images to the mobile device for display. Such enterprise or proxy servers generally do not store the state of their clients (i.e. the browser user-agent), or if they do, the state that is stored is minimal and limited to HTTP state (i.e. cookies). Typically, such enterprise or proxy servers fetch and transmit data to the browser user-agent when the browser makes a data request. In order to improve the performance of the browser on the mobile device, some enterprise or proxy servers fetch all the data required in order to fulfill the data request from the browser, aggregate the fetched data, and transmit the data to the device browser. For instance, if a HyperText Markup Language (HTML) page is requested, the enterprise or proxy server fetches any additional files referenced within the HTML page (e.g. Images, inline CSS code, JavaScript, etc.). Since the proxy server fetches all the additional files within the HTML file, the device does not have to make additional data requests to retrieve these additional files. Although this methodology is faster than having the device make multiple requests, the proxy server nonetheless has to send all of the data again if the site is later revisited. This is because the proxy server has no knowledge of the device caches (e.g. caches that are saved in persistent memory, for different types of data such as a content cache to store raw data that is cached as a result of normal browser activity, a channel cache containing data that is sent to the device by a channel or cache push, and a cookie cache containing cookies that are assigned to the browser by visited Web pages). For example, if a user browses to CNN.com, closes the browser to perform some other function (e.g. place a telephone call or access e-mail messages, etc.) and then later accesses the CNN.com Web site (or follows a link from CNN.com to a news story), the banner "CNN.com" will be transmitted from the MDS to the device browser each time the site is accessed, thereby consuming significant bandwidth, introducing delay, etc.

It is known in the art to provide local file caching. One approach is set forth in GloMop: Global Mobile Computing By Proxy, published September 13, 1995, by the GloMop Group, wherein PC Card hard drives are used as portable file caches for storing, as an example, all of the users' email and Web caches. The user synchronizes the file caches and the proxy server keeps track of the contents. Mobile applications (clients) are able to check the file caches before asking for information from the proxy server by having the server verify that the local version of a given file is current.

"Method of recognizing duplicates in received information" by William H Collins et al, published in Research Disclosure vol. 400, no. 45 on 1 December 2000 by Mason Publications, Hampshire, Great Britain discloses a method by which a communication device can determine whether it has already received and acted upon a data object. Each time a data object is received by the communication device it calculates a hash value and compares this with a list of previously stored hash values. If the hash value is found in the list then the communication device knows that the data object has already been acted upon and takes no further action. However, if it is not found in the list then the communication device takes the appropriate action and stores the hash value in the list. US 5864837 A concerns methods and an apparatus for efficient caching in a distributed environment.
US 2005/0050461 A1 relates to a method and a system for packing and unpacking web pages.

### Summary

In general, there is provided a method in accordance with annexed claim 1.

A specific application of this method provides for communicating information between the second computing device, such as an enterprise or proxy server and the first computing device, such as a mobile Internet browser. An HTTP-like protocol is set forth, referred to herein as the Browser Session Management (BSM) protocol, for providing a control channel between the second computing device, and the first computing device, so that the first computing device can communicate to the second computing device what data the first computing device has stored in memory (from previous browsing). The BSM protocol is an "out of band" protocol in that BSM communications are in addition to the usual stream of HTTP requests from the first computing device to the second computing device, and provide "metadata" relating to cache contents. This metadata is used by the second computing device when handling subsequent requests from the first computing device, to determine what data to send to the first computing device, thereby significantly-reducing data transfer on subsequent requests relative to the prior art methodology discussed above.

Because the second computing device is aware of what the first computing device has stored in its cache, the amount of data sent to the first computing device may be reduced, thereby increasing the performance of the first computing device and reducing operational cost. For the application given above wherein the first computing device is a mobile device browser and the second computing device is a proxy server, if after the first request the CNN.com banner is cached and if the proxy server "knows" that the information has been cached then there will be no need to send the CNN.com banner to the mobile device browser upon subsequent visits to the CNN Web site.

According to another aspect, messages from the device to the proxy server contain hash values of different portions of documents (rather than the actual URLs) which are used by the proxy server to detect state changes in the device and utilize the information in preparing documents for transmission to the device. In another embodiment, the device sends hashes of the actual data of the portions (i.e. the actual image data, JavaScripts, StyleSheets, etc.) and the proxy server compares the received and stored data hashes for the portions to determine if the device already has the data for a particular portion (e.g. previously retrieved with a different URL), in which case the proxy server sends a response to the device with a header that indicates the device already has the data that is to be used for that portion. A person of skill in the art will appreciate that a one-way hash function transforms data into a value of fixed length (hash value) that represents the original data. Ideally, the hash function is constructed so that two sets of data will rarely generate the same hash value. Examples of known hash functions include MD2, MD5 and SHA-1.

In contrast to the prior art *GloMop* caching methodology discussed above, the exemplary method set forth herein synchronizes the cache contents when the mobile device browser connects to the proxy server in order to initiate a session and keeps track of changes to the cache via knowledge of what data has been sent to the mobile device browser in combination with state information periodically received from the mobile device browser identifying what has actually been cached. Also, as set forth in greater detail below, the proxy server uses this cache knowledge to determine what to send back to the mobile device browser. In contrast, the prior art *GloMop* methodology does not contemplate sending any state information to the proxy server for identifying what has actually been cached in the device. Moreover, the prior art *GloMop* approach first checks the local cache, and then queries the proxy server to determine whether a particular data item in the cache is current or not. According to the *GloMop* prior art, the proxy server does not use its own knowledge of the mobile device browser cache to determine what to send back to the mobile device browser.

Additional aspects and advantages will be apparent to a person of ordinary skill in the art, residing in the details of construction and operation as more fully hereinafter described and claimed, reference being had to the accompanying drawings.

### Brief Description of the Drawing

A detailed description of the preferred embodiment is set forth in detail below, with reference to the following drawings, in which:
Figure 1 is a block diagram of a communication system for implementing Internet browsing functionality in a mobile communication device;
Figure 2A shows communication protocol stacks for the communication system of Figure 1;
Figure 2B shows communication protocol stacks for a Browser Session Management (BSM) protocol according to an exemplary embodiment;
Figure 3 is a flowchart showing the method for communicating information between a proxy server and a mobile Internet browser, according to the preferred embodiment; and
Figure 4 is a flowchart of an exemplary method according to the present specification.

### Detailed Description

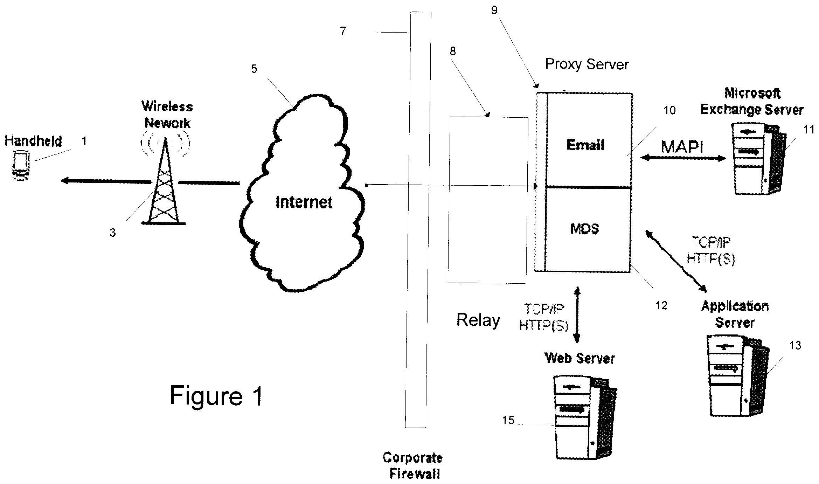

Figure 1 depicts the architecture of a system for providing wireless e-mail and data communication between a mobile device 1 and an enterprise or proxy server 9. Communication with the device 1 is effected over a wireless network 3, which in turn is connected to the Internet 5 and proxy server 9 through corporate firewall 7 and relay 8. Alternatively, the device 1 can connect directly (via the Internet) through the corporate firewall 7 to the proxy server 9. When a new message is received in a user's mailbox within email server 11, enterprise or proxy server 9 is notified of the new message and email application 10 (e.g. Messaging Application Programming Interface (MAPI), MS Exchange, etc.) copies the message out to the device 1 using a push-based operation. Alternatively, an exemplary architecture for proxy server 9 may provide a browsing proxy but no email application 10. Indeed, the exemplary embodiment set forth herein relates to mobile browser device functionality and is not related to email functionality. Proxy server 9 also provides access to data on an application server 13 and the Web server 15 via a Mobile Data Service (MDS) 12. Additional details regarding e-mail messaging, MAPI sessions, attachment service, etc., are omitted from this description as they are not germane. Nonetheless, such details would be known to persons of ordinary skill in the art.

In terms of Web browsing functionality, the device 1 communicates with enterprise or proxy server 9 using HTTP over an IP protocol optimized for mobile environments. In some embodiments, the device 1 communicates with the proxy server 9 using HTTP over TCP/IP, over a variant of TCP/IP optimized for mobile use (e.g. Wireless Profiled TCP), or over other, proprietary protocols. For example, according to the communications protocol of Fgure 2A, HTTP is run over Internet Point-to-Point Protocol (IPPP) and an encrypted Global Messaging Exchange (GME) channel over which datagrams are exchanged to transport data between the device 1 and proxy server 9. The GME datagrams are 64Kbit in size whereas the wireless network 3 can only transport UDP datagrams with payloads up to 1500 bytes. Therefore, a Message Delivery Protocol (MDP) is used to separate the GME datagrams into one or more MDP packets, each of which is less than 1500 bytes (default size 1300 bytes), which are transported over UDP/IP to and from the relay 8 which, in turn communicates with the proxy server 9 via Server Relay Protocol (SRP)/TCP/IP. The MDP protocol includes acknowledgements, timeouts and re-sends to ensure that all packets of the GME datagram are received.

The communication between the device 1 and proxy server 9 is optionally encrypted with an encryption scheme, such as Triple Data Encryption Algorithm (TDEA, formerly referred to as Triple Data Encryption Standard (Triple DES)), as is known in the art. The proxy server 9 enables Internet access, preprocesses and compresses HTML and XML content from the Web server 15 before sending it to the device 1, transcodes content type, stores HTTP cookies on behalf of the device 1, and supports certificate authority authentications, etc.

In response to a request from the device browser, the proxy server 9 retrieves content from Web server 15 and creates a custom document containing both images to be displayed on the device and data in the form of compressed versions of requested portions of the document. The document is preferably of "multi-part" format to improve transmission to and processing efficiency within the device 1. Specifically, in order to display composite Web pages (i.e. pages composed of a main WML or HTML page and one or more related auxiliary files, such as style sheets, JavaScript files, or image files) the device browser is normally required to send multiple HTTP requests to the proxy server 9. However, according to the multi-part generation feature, the proxy server 9 posts all necessary parts of a composite Web page in a single bundle, enabling the browser to download all the required content with a single request. The header in the server response identifies the content as a multi-part bundle (e.g. MultiPurpose Mail Extensions (MIME)/multipart,as defined by RFC 2112, E. Levinson, March 1997).

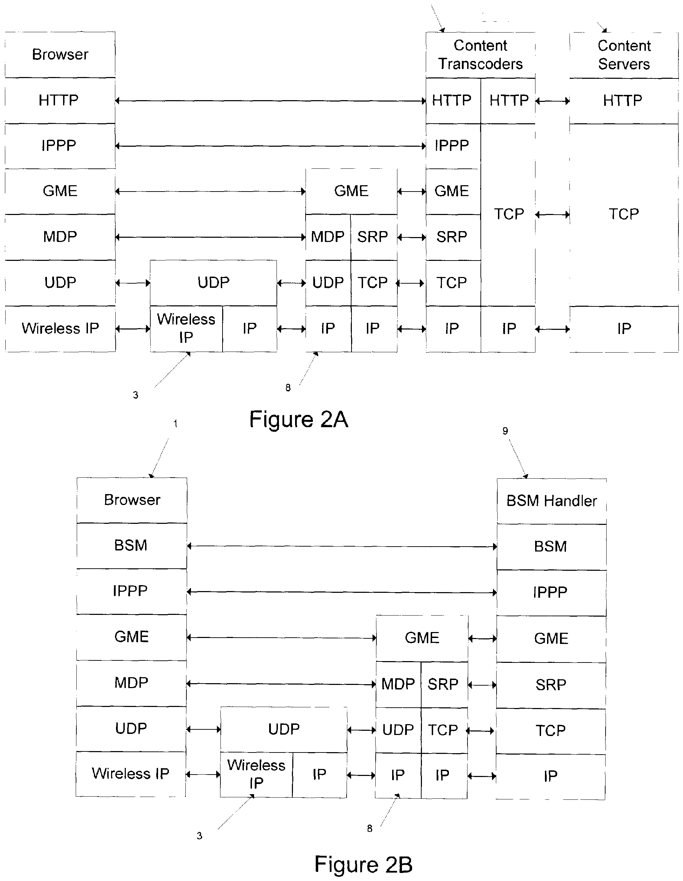

In order to indicate device browser state information to the proxy server 9, three transitional state messages are defined herein, as follows: CONNECT, UPDATE and DISCONNECT, each of which conforms to the exemplary BSM protocol. As shown in Figure 2B, the BSM communications protocol is identical to the protocol of Figure 2A except that the conventional HTTP layer of the protocol stack is replaced by an HTTP-like BSM layer.

The CONNECT transitional message creates a new session with a connection identifier carried in the payload, device information and state data (e.g. current cache and device information) in the form of a set of hash functions for use by the proxy server 9 in preparing a response. Specific care is taken not to identify to the proxy server 9 what cookies or cache entries are contained on the device 1. Only hash values of the state data are sent to the proxy server 9 in order to protect the identity of state data on the device 1.

The CONNECT message also contains a unique authentication key for generating a MAC (Message Authentication Code) using a Hash Message Authentication Code (HMAC) algorithm that incorporates a cryptographic hash function in combination with the authentication key. Each portion of a multi-part document from the proxy server 9 also contains an HMAC, generated using the authentication key, that is used for authenticating the proxy server 9 before adding that portion to the device cache. This prevents a third party from creating its own multi-part document and sending it to the device 1 for injecting cache entries that could be used to extract personal information from the user.

Upon receipt of the CONNECT message, the proxy server 9 uses the state information to regulate or control the transmission of content retrieved from Web server 15 (step 23) to the device 1. One example of an application where this information can be used is when the proxy server 9 is pre-fetching images, inline Cascading Style Sheets (CSS), JavaScript, and the like for an HTML document. If the proxy server 9 already knows that the device 1 has the image, inline CSS, or JavaScript document, there is no need for resending the documents.

The UPDATE transition message notifies the proxy server 9 of changes that have occurred on the device 1 since the last CONNECT message or the last UPDATE message, between the device 1 and proxy server 9 (e.g. new cache entries added because of a push, or invoking the "Low Memory Manager" (LMM) or other memory-space preservation policies on the device and purging items from the cache).

The DISCONNECT transition message notifies the proxy server 9 that the device 1 will no longer send any more messages using the connection identifier specified in the payload. The proxy server 9 can then de-allocate any memory reserved for the connect session between the device 1 and proxy server 9. Upon receiving the disconnect message, the proxy server 9 deletes any session cookies for the device 1 (if it is processing cookies) along with state information. Receiving a request on the identified connection after the DISCONNECT has been received, and before any subsequent CONNECT message has been received, is defined as an error.

Since state is indicated from the device 1 to the proxy server 9, and state may be stored in transient memory within proxy server 9, a mechanism is provided for the proxy server 9 to return to the device 1 a message indicating that the session the device is trying to use is not valid. Once this occurs, the device 1 issues a new CONNECT message and establishes a new session with the proxy server 9, and re-issues the original request.

The data protocol set forth herein is similar to HTTP in order to reduce complexity and to reuse code that already exists for the HTTP protocol. Thus, data transmission according to this protocol begins with a STATE keyword; followed by a BSM (Browser Session Management) protocol identifier and a "Content-Length" header. The end of the "headers" is indicated by a double CRLF (a sequence of control characters consisting of a carriage return (CR) and a line feed (LF)), much like HTTP. After the double CRLF pair (i.e. \r\n) a WBXML (WAP Binary Extensible Markup Language) encoded document is inserted as the message payload. The WBXML document is later decoded using a DTD (Document Type Definition) and codebook, as discussed in greater detail below. The indication of the protocol version refers to what version of the DTD to validate the request against (ie. BSM/1.1 stipulates using version 1.1 of the DTD). It should be noted that WBXML encoding of the contents of BSM messages is set forth to allow for more efficient processing of the BSM message at the device 1, but that in alternate embodiments, the BSM message may be formatted as normal (textual) XML.

The following is an example communication using the protocol according to the preferred embodiment:

```
        CONNECT BSM/1.0\r\n
        Content-Length: 40\r\n
        \r\n
        <WBXML Encoded document of length 40 bytes>
        BSM/1.0 200\r\n
        r\n
```

In the foregoing, the first four lines form the CONNECT message from the device 1 to the proxy server 9, and the last two lines are the response from the proxy server 9.

An exemplary XML document, is as follows:

```
 <?xml version="1.0"?>
 <!DOCTYPE bsm PUBLIC "-// DTD BSM 1.0//EN"
      "http://www.something.com/go/mobile/BSM/bsm_1.0.xml">
      <bsm id="2" hmac="12345678901234567890">
      <cache>
      <size>123012</size>
      <entry urlHash="FEEDDEED01" dataHash="FDDEDEEDII" etag="SomeEtag"
      expiry="256712323"/>
      </cache>
      <device>
      <version>4.0.1.123</version>
      <memfree>12392342</memfree>
      </device>
      </bsm>
```

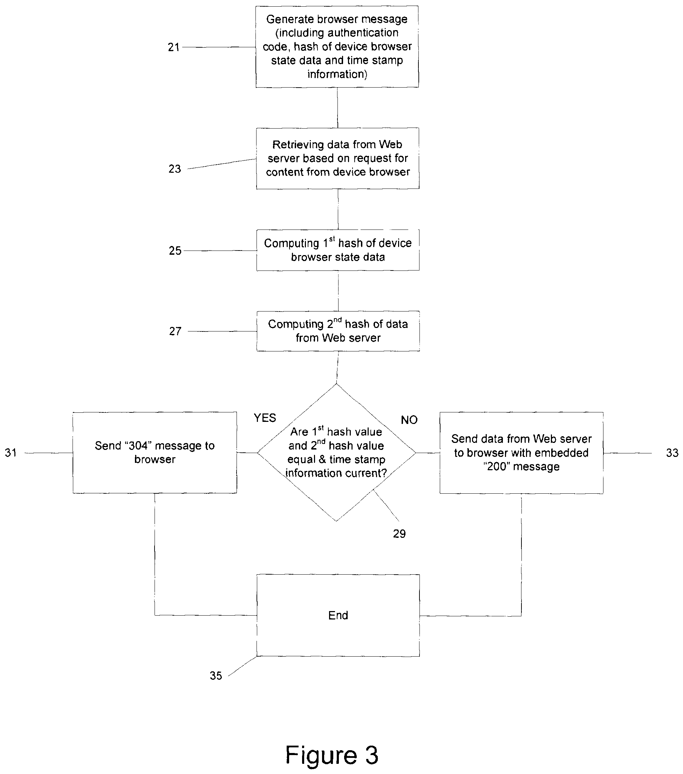

In the example, the state data includes the URL of an HTML page within the device cache. It will be noted that the XML document payload includes a connection identifier (i.e. bsm id="2"), a value indicating when the document was last modified (i.e. etag="SomeEtag"), a page expiry (i.e. expiry="256712323"), and hash values for a URL (i.e. entry urlHash="FEEDDEED01") and a data attribute (i.e. entry dataHash="FDDEDEED11") rather than transmitting the actual URL and data attribute themselves. Thus, as shown in Figure 3, the hashes of the URL and data attribute of the cached page are sent to the proxy server 9 in the CONNECT string (step 21). The proxy server 9 then fetches the requested page from Web server 13 (step 23), computes hashes of device browser state data (step 25) and data from the Web server 13 (step 27), and compares the hashes of the URL and data attribute of the requested page with the hashed URL and data attribute of the cached page, and also compares the time stamps/expiration information (step 29) in order to determine whether the cached page is current. Specifically, in response to the proxy server 9 retrieving a portion from the Web server 13, it computes the dataHash and urlHash of that portion and performs a comparison to the dataHashes and urlHashes of the entries it has saved. There are three cases.

In the first case, if both the dataHash and the urlHash of the retrieved portion match the dataHash and urlHash of a cache entry that the proxy server 9 knows the device 1 has, then the server 13 simply omits this portion from the response, as the device 1 still has a valid entry in its cache.

In the second case, if the dataHash of the retrieved portion matches the dataHash of a cache entry that the proxy server 9 knows the device 1 has, but the urlHash of the retrieved portion does not match the urlHash of that cache entry, the server 13 inlines this updated portion in the combined response to the device 1. However, because the dataHash matches a dataHash of an entry that already exists on the device 1, the inlined response does not include the actual data, but instead only includes a new HTTP header whose value is the new dataHash. When the device 1 receives this inlined portion, it detects the special header, looks for the cache entry with that dataHash, and either creates or updates its cache entry for that URL with the data corresponding to the dataHash by copying that data from the other cache entry (the cache for device 1 is modified to have two indexes, one to retrieve cache entries by URL, the other to retrieve cache entries by dataHash). Finally, if the proxy server 9 already has a cache entry for the urlHash, it updates that entry with the new dataHash; otherwise it creates a new entry for this portion.

In the third case, if the dataHash of the retrieved portion does not match the dataHash of any of the cache entries that the proxy server 9 has received from the device 1 in the BSM messages, then the server inlines the entire portion (headers and new data), since this portion has been updated and the device 1 does not contain the updated value anywhere in its cache.

Although not indicated in Figure 3, it will be appreciated that each inline part to be added to a document to be displayed at the device 1 is fetched. If the response code from the proxy server indicates a "304" (step 31), then the part (i.e., the "304" response) is written as a block in the multipart document. On the other hand, if the proxy server 9 returns a "200" (step 33), then the hash compare operation is performed, and the portion is only included in the multipart document if the hash compare function indicates it is not already on the device 1.

An exemplary DTD, according to the preferred embodiment, is as follows:

```
 <!ELEMENT bsm (cache?, device)>
 <!ATTLIST bsm
      id NMTOKEN #REQUIRED
      >
      <!ELEMENT cache (size, (entry)+)>
      <!ATTLIST cache
      action (add|remove|remove_all|quick_add) "add"
      >
      <!ELEMENT entry EMPTY>
      <!ATTLIST entry
     ur1Hash CDATA #REQUIRED
     dataHash CDATA #REQUIRED
     etag CDATA #IMPLIED
     expiry NMTOKEN #IMPLIED
     size NMTOKEN #IMPLIED
     last-modified NMTOKEN #IMPLIED
     >
     <!ELEMENT size (#PCDATA)>
     <!ELEMENT device (version, memfree)>
     <! ELEMENT version (#PCDATA)>
     <!ELEMENT memfree (#PCDATA)>
     <!ELEMENT hmac (#PCDATA)>
     Element/Code
     HMAC 12
     Attribute/Code
     size 9 (instead of action)
     lastModified 10
     actionAdd 11
     actionRemove 12
     actionRemoveAll 13
     actionQuickAdd 14
```

Finally, an exemplary codebook, is as follows:

| **Element** | **Code** |
|---|---|
| Session | 5 |
| Cache | 6 |
| Size | 7 |
| Entry | 8 |
| Device | 9 |
| Version | 10 |
| MemFree | 11 |
| HMAC | 12 |

| **Attribute** | **Code** |
|---|---|
| Id | 5 |
| UrlHash | 6 |
| dataHash | 7 |
| ETag | 8 |
| Expiry | 9 |
| Action | 10 |

As is well known in the art, the codebook is used as a transformation for compressing the XML document to WBXML, wherein each text token is represented by a single byte from the codebook.

As discussed above, the proxy server 9 transmits multi-part documents in a proprietary format of compressed HTML, interspersed with data for images and other auxiliary files (which may or may not be related to the main HTML Web page). However, in a departure from conventional HTML, each document part may also include a response code (e.g. "200" for OK, or "304" for "not modified" to indicate that the specified document part has already been cached in the device 1). This may be used for selective downloading of document parts rather than entire documents and for indicating when a part (e.g. image) is about to expire. This is useful, for example, when one Web page links to another page containing one or more common elements.

Of course, certain device requests (e.g. page refresh) will always result in a full document download, irrespective of device state information stored in the proxy server 9.

It is contemplated that the inclusion of response codes may be used by heuristic processes within the proxy server 9 to learn user behaviour and modify downloading of documents based on tracking the history of certain changes reflected in the hash value (e.g. the server 9 may learn to download a certain page (e.g. CNN news) at a particular time each day based the user's history of issuing requests for that page at regular times. As discussed above, because the downloaded documents are multi-part and contain embedded response codes, only those portions of the document that have changed are actually downloaded.

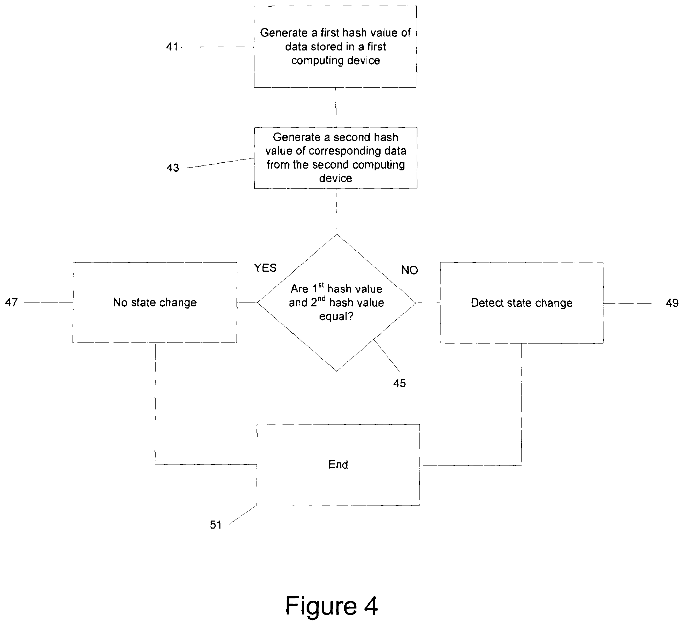

Figure 4 illustrates a broad aspect of the exemplary method, wherein a first hash value is generated in a first computing device, such as mobile device 1 (step 41), and a second hash value is generated in a second computing device, such as proxy server 9 (step 43). The first and second hash values are then compared (step 45). If the hash values are identical (step 47), no change of state is detected between the data stored in the first and second computing devices. On the other hand, if the hash values are identical (step 49), state change is detected between the data stored in the first and second computing devices. The method then ends (step 51).

As indicated above, the protocol of the preferred embodiment is preferably carried over a proprietary IPPP transport layer, but can also be easily adapted to run over TCP/IP on a specific port. The protocol is preferably implemented as a handler in the proxy server 9, thereby simplifying any currently existing protocol. (e.g. to avoid overloading a current HTTP protocol).

A person skilled in the art, having read this description of the preferred embodiment, may conceive of variations and alternative embodiments. For example, the conditional transfer of data based on communication of state information, as set forth above, may also be applied to separately transmitting individual portions of the multipart document as opposed to transmitting the entire document at once.

In some embodiments, the proxy server 9 uses heuristic algorithms to learn what additional data requests the device may make based on knowledge of the current request, and knowledge of past activity. In some instances, the device may follow a pattern of requesting a first Web page, and then a second Web page. For example, the device may first request the "cnn.com" Web page, and then request the "cnn.com/news" Web page. The proxy server 9 learns this pattern, and whenever the device requests the first Web page, the proxy server 9 determines that the device is likely to then request the second Web page. The proxy server 9 then fetches the second Web page, and uses its knowledge of the data cached on the device 1 (i.e. from the state information transferred to the proxy server 9 during initiation of the present connection) to determine whether the second Web page already exists within the data cached on the device. If so, the proxy server 9 includes information about the second Web page via response codes embedded within the response provided for the first Web page. If the device 1 requires the second Web page, then the device 1 can reference its cache and can avoid having to make a request to the proxy server 9 for the second Web page.

In other embodiments, heuristic processes within the proxy server 9 learn user behaviour and modify downloading of documents based on tracking the history of certain changes reflected in the hash value (e.g. the proxy server 9 may learn to download a certain page (e.g. CNN news) at a particular time each day based the user's history of issuing requests for that page at regular times). As discussed, because the downloaded documents are multi-part and contain embedded response codes, only those portions of the document that have changed are actually downloaded.

All such variations and alternative embodiments are believed to be within the ambit of the claims appended hereto.

## Claims

1. A method for detecting state changes between data stored in a first computing device (1) and data requested from a second computing device (9), the second computing device (9) configured to transmit a multi-part document in response to a request from the first computing device (1), the requested data relating to parts of the multi-part document, the method comprising:
generating (41) a first hash value of said data stored in said first computing device (1) by generating a first pair of hash values of said data stored in said first computing device (1), wherein said first pair of hash values is generated by respectively applying a hash function on a uniform resource locator 'URL' and on a data attribute being requested by said first computing device (1);
transmitting said first hash value from said first computing device (1) to said second computing device (9);
generating (43) a second hash value of said data requested from said second computing device (9) corresponding to said data stored in said first computing device (1) by generating a second pair of hash values of data requested from said second computing device (9) correspondingto said data stored in said first computing device (1), wherein said second pair of hash values is generated by respectively applying a hash function on a corresponding URL and on a corresponding data attribute stored at said second computing device (9);
comparing (45) said first hash value to said second hash value at said second computing device (9) by comparing said first pair of hash values to said second pair of hash values at said second computing device (9), detecting (49) a state change in the event of a difference between said hash values, and transmitting said data requested from said second computing device (9) to said first computing device (1) in the event said first hash value and said second hash value are different; and
detecting that the hash value of said corresponding data attribute stored at said second computing device (9) matches the hash value of a cache entry of said data attribute in said first computing device (1), detecting that the hash value of said corresponding URL stored at said second computing device (9) does not match the hash value of a cache entry of said URL in said first computing device (1), and sending an inlined response from said second computing device (9) to said first computing device (1), the inlined response comprising a Hyper Text Transfer Protocol 'HTTP' header without said corresponding data attribute, a value of the 'HTTP' header being the hash value of said corresponding data attribute stored at said second computing device (9).

2. The method of claim 1, wherein said first hash value represents state information of said first computing device (1) and said second hash value represents said data requested from said second computing device (9) corresponding to said data stored in said first computing device (1).

3. The method of any one of claims 1 to 2, further comprising embedding said first hash value within a transitional state message from said first computing device (1) to said second computing device (9).

4. The method of any one of the preceding claims, wherein said first hash value is generated by performing a hash function on a uniform resource locator 'URL' being requested by said first computing device (1), and said second hash value is generated by performing a hash function on a corresponding URL stored at said second computing device (9).

5. The method of any one of claims 1 to 3, wherein said first hash value is generated by performing a hash function on a data attribute being requested by said first computing device (1), and said second hash value is generated by performing a hash function on a corresponding data attribute stored at said second computing device (9).

6. The method of claim 1, wherein said first pair of hash values represents state information regarding a document stored in said first computing device (1) and said pair of second hash values represents said data requested from said second computing device (9) corresponding to said data stored in said first computing device (1).

7. The method of claim 1 or claim 6, further comprising transmitting said first pair of hash values from said first computing device (1) to said second computing device (9), and transmitting said data requested from said second computing device (9) to said first computing device (1) only in the event said first pair of hash values differ from said second pair of hash values.

8. The method of any one of claims 1, 6 and 7, further comprising embedding said first pair of hash values within a transitional state message from said first computing device (1) to said second computing device (9).

9. The method of claim 1, further comprising receiving said inlined response within said first computing device (1), detecting said header and in response locating a first cache entry with said hash value of said corresponding data attribute within said first computing device (1), and one of either creating or updating a further cache entry for said URL with data corresponding to said hash value of said corresponding data attribute by copying from said first cache entry.

10. The method of claim 1 or claim 9, further comprising locating a first cache entry with said hash value of said corresponding data attribute within said second computing device (9), and one of either creating or updating a further cache entry for said URL with data corresponding to said hash value of said corresponding data attribute by copying from said first cache entry.

11. The method of claim 1, further comprising detecting that the hash value of said corresponding data attribute stored at said second computing device (9) does not match the hash value of a cache entry of said data attribute in said first computing device (1), and sending an inlined response from said second computing device (9) to said first computing device (1) for updating said corresponding data retrieved from said second computing device (9), wherein said inlined response includes the corresponding data attribute retrieved from said second computing device (9).

12. The method of any one of claims 1, and 6 to 11, wherein said first and second hash values are generated using hash functions selected from a group comprising MD2, MD5 and SHA-1.

13. A system for detecting state changes between data stored in a first computing device (1) and data requested from a second computing device (9), the second computing device (9) configured to transmit a multi-part document in response to a request from the first computing device (1), the requested data relating to parts of the multi-part document, the system comprising:
a first hash value generator for generating (41) a first hash value of said data stored in said first computing device (1) by generating a first pair of hash values of said data stored in said first computing device (1), wherein said pair of first hash values is generated by respectively applying a hash function on a uniform resource locator 'URL' and on a data attribute being requested by said first computing device (1);
a second hash value generator for generating (43) a second hash value of said data requested from said second computing device (9) corresponding to said data stored in said first computing device (1) by generating a second pair of hash values of data requested from said second computing device (9) corresponding to said data stored in said first computing device (1), wherein said second pair of hash values is generated by respectively applying a hash function on a corresponding URL and on a corresponding data attribute stored at said second computing device (9);
a comparator for comparing (45) said first hash value to said second hash value by comparing said first pair of hash values to said second pair of hash values at said second computing device (9), detecting (49) a state change in the event of a difference between said hash values, and transmitting said data requested from said second computing device (9) to said first computing device (1) in the event said first hash value and said second hash value are different; and
a detector for detecting that the hash value of said corresponding data attribute stored at said second computing device (9) matches the hash value of a cache entry of said data attribute in said first computing device (1), detecting that the hash value of said corresponding URL stored at said second computing device (9) does not match the hash value of a cache entry of said URL in said first computing device (1), and sending an inlined response from said second computing device (9) to said first computing device (1), the inlined response comprising a Hyper Text Transfer Protocol 'HTTP' header without said corresponding data attribute, a value of the 'HTTP' header being the hash value of said corresponding data attribute stored at said second computing device (9).

14. A computer readable medium storing computer readable instructions executable by a processor of a computing system to cause said system to implement the steps of the method of any one of claims 1 to 12.

## Patentansprüche

1. Verfahren zum Detektieren von Zustandsänderungen zwischen in einer ersten Datenverarbeitungseinrichtung (1) gespeicherten Daten und aus einer zweiten Datenverarbeitungseinrichtung (9) angeforderten Daten, wobei die zweite Datenverarbeitungseinrichtung (9) zum Übertragen eines mehrteiligen Dokuments in Antwort auf eine Anfrage von der ersten Datenverarbeitungseinrichtung (1) konfiguriert ist, wobei die angeforderten Daten Teile des mehrteiligen Dokuments betreffen, wobei das Verfahren aufweist:
Erzeugen (41) eines ersten Hash-Werts der in der ersten Datenverarbeitungseinrichtung (1) gespeicherten Daten durch Erzeugen eines ersten Paares von Hash-Werten der in der ersten Datenverarbeitungseinrichtung (1) gespeicherten Daten, wobei das erste Paar von Hash-Werten durch jeweiliges Anwenden einer Hash-Funktion auf einen einheitlichen Ressourcenzeiger "URL" und auf ein Datenattribut, das von der ersten Datenverarbeitungseinrichtung (1) angefordert wird, erzeugt wird;
Übertragen des ersten Hash-Werts von der ersten Datenverarbeitungseinrichtung (1) an die zweite Datenverarbeitungseinrichtung (9);
Erzeugen (43) eines zweiten Hash-Wertes der von der zweiten Datenverarbeitungseinrichtung (9) angeforderten Daten, die den in der ersten Datenverarbeitungseinrichtung (1) gespeicherten Daten entsprechen, durch Erzeugen eines zweiten Paares von Hash-Werten von aus der zweiten Datenverarbeitungseinrichtung angeforderten Daten (9), die den in der ersten Datenverarbeitungseinrichtung (1) gespeicherten Daten entsprechen, wobei das zweite Paar von Hashwerten, durch jeweiliges Anwenden einer Hash-Funktion auf einen entsprechenden URL und auf ein entsprechendes Datenattribut, das in der zweiten Datenverarbeitungseinrichtung (9) gespeichert ist, erzeugt wird;
Vergleichen (45) des ersten Hash-Werts mit dem zweiten Hash-Wert bei der zweiten Datenverarbeitungseinrichtung (9) durch Vergleichen des ersten Paares von Hash-Werten mit dem zweiten Paar von Hash-Werten bei der zweiten Datenverarbeitungseinrichtung (9), Detektieren (49) einer Zustandsänderung in dem Fall eines Unterschieds zwischen den Hash-Werten, und Übertragen der von der zweiten Datenverarbeitungseinrichtung (9) angeforderten Daten an die erste Datenverarbeitungseinrichtung (1) in dem Fall, dass der erste Hash-Wert und der zweite Hash-Wert unterschiedlich sind; und
Detektieren, dass der Hash-Wert des entsprechenden Datenattributs, das in der zweiten Datenverarbeitungseinrichtung (9) gespeichert ist, mit dem Hash-Wert eines Cache-Eintrags des Datenattributs in der ersten Datenverarbeitungseinrichtung (1) übereinstimmt, Detektieren, dass der Hash-Wert des entsprechenden in der zweiten Datenverarbeitungseinrichtung (9) gespeicherten URL nicht mit dem Hash-Wert eines Cache-Eintrags der URL in der ersten Datenverarbeitungseinrichtung (1) übereinstimmt, und Senden einer eingebetteten Antwort von der zweiten Datenverarbeitungseinrichtung (9) an die erste Datenverarbeitungseinrichtung (1), wobei die eingebettete Antwort einen Hypertextübertragungsprotokoll- "HTTP" Header ohne das entsprechende Datenattribut aufweist, wobei ein Wert des "HTTP"-Headers der Hash-Wert des entsprechenden in der zweiten Datenverarbeitungseinrichtung (9) gespeicherten Datenattributs ist.

2. Verfahren nach Anspruch 1, wobei der erste Hash-Wert Zustandsinformationen der ersten Datenverarbeitungseinrichtung (1) darstellt und der zweite Hash-Wert die von der zweiten Datenverarbeitungseinrichtung (9) angeforderten Daten, die den in der ersten Datenverarbeitungseinrichtung (1) gespeicherten Daten entsprechen, darstellt.

3. Verfahren nach einem der Ansprüche 1 bis 2, ferner aufweisend Einbetten des ersten Hash-Werts in eine Übergangszustandsnachricht von der ersten Datenverarbeitungseinrichtung (1) an die zweite Datenverarbeitungseinrichtung (9).

4. Verfahren nach einem der vorhergehenden Ansprüche, wobei der erste Hash-Wert durch Ausführen einer Hash-Funktion auf einen von der ersten Datenverarbeitungseinrichtung (1) angeforderten einheitlichen Ressourcenanzeiger "URL" erzeugt wird und der zweite Hash-Wert durch Ausführen einer Hash-Funktion auf einen entsprechenden in der zweiten Datenverarbeitungseinrichtung (9) gespeicherten URL erzeugt wird.

5. Verfahren nach einem der Ansprüche 1 bis 3, wobei der erste Hash-Wert durch Ausführen einer Hash-Funktion auf einem Datenattribut, das von der ersten Datenverarbeitungseinrichtung (1) angefordert wird, erzeugt wird, und der zweite Hash-Wert durch Ausführen einer Hash-Funktion auf einem entsprechenden in der zweiten Datenverarbeitungseinrichtung (9) gespeicherten Datenattribut erzeugt wird.

6. Verfahren nach Anspruch 1, wobei das erste Paar von Hash-Werten Zustandsinformationen bezüglich eines in der ersten Datenverarbeitungseinrichtung (1) gespeicherten Dokuments darstellt und das zweite Paar von Hash-Werten die von der zweiten Datenverarbeitungseinrichtung (9) angeforderten Daten, die den in der ersten Datenverarbeitungseinrichtung (1) gespeicherten Daten entsprechen, darstellt.

7. Verfahren nach Anspruch 1 oder Anspruch 6, ferner aufweisend Übertragen des ersten Paares von Hash-Werten von der ersten Datenverarbeitungseinrichtung (1) an die zweite Datenverarbeitungseinrichtung (9) und Übertragen der von der zweiten Datenverarbeitungseinrichtung (9) angeforderten Daten an die erste Datenverarbeitungseinrichtung (1) nur in dem Fall, dass sich das erste Paar von Hash-Werten von dem zweiten Paar von Hash-Werten unterscheidet.

8. Verfahren nach einem der Ansprüche 1, 6 und 7, ferner aufweisend Einbetten des ersten Paares von Hash-Werten in eine Übergangszustandsnachricht von der ersten Datenverarbeitungseinrichtung (1) an die zweite Datenverarbeitungseinrichtung (9).

9. Verfahren nach Anspruch 1, ferner aufweisend Empfangen der eingebetteten Antwort in der ersten Datenverarbeitungseinrichtung (1), Detektieren des Headers, und, als Reaktion, Auffinden eines ersten Cache-Eintrags mit dem Hash-Wert des entsprechenden Datenattributs in der ersten Datenverarbeitungseinrichtung (1), und eines von entweder Erzeugen oder Aktualisieren eines weiteren Cache-Eintrags für den URL mit Daten, die dem Hash-Wert des entsprechenden Datenattributs entsprechen, durch Kopieren aus dem ersten Cache-Eintrag.

10. Verfahren nach Anspruch 1 oder Anspruch 9, ferner aufweisend Auffinden eines ersten Cache-Eintrags mit dem Hash-Wert des entsprechenden Datenattributs in der zweiten Datenverarbeitungseinheit (9), und eines von entweder Erstellen oder Aktualisieren eines weiteren Cache-Eintrags für den URL mit Daten, die dem Hash-Wert des entsprechenden Datenattributs entsprechen, durch Kopieren aus dem ersten Cache-Eintrag.

11. Verfahren nach Anspruch 1, ferner aufweisend Detektieren, dass der Hash-Wert des entsprechenden Datenattributs, das in der zweiten Datenverarbeitungseinrichtung (9) gespeichert ist, nicht mit dem Hash-Wert eines Cache-Eintrags des Datenattributs in der ersten Datenverarbeitungseinrichtung (1) übereinstimmt, und Senden einer eingebetteten Antwort von der zweiten Datenverarbeitungseinrichtung (9) an die erste Datenverarbeitungseinrichtung (1) zum Aktualisieren der entsprechenden von der zweiten Datenverarbeitungseinrichtung (9) abgerufenen Daten, wobei die eingebettete Antwort das entsprechende von der zweiten Datenverarbeitungseinrichtung (9) empfangende Datenattribut aufweist.

12. Verfahren nach einem der Ansprüche 1 und 6 bis 11, wobei der erste und der zweite Hash-Wert unter Verwendung von Hash-Funktionen erzeugt werden, die aus einer Gruppe ausgewählt sind, die MD2, MD5 und SHA-1 aufweist.

13. System zum Detektieren von Zustandsänderungen zwischen in einer ersten Datenverarbeitungseinrichtung (1) gespeicherten Daten und von einer zweiten Datenverarbeitungseinrichtung (9) angeforderten Daten, wobei die zweite Datenverarbeitungseinrichtung (9) zum Übertragen eines mehrteiligen Dokuments in Antwort auf eine Anforderung von der ersten Datenverarbeitungseinrichtung (1) konfiguriert ist, wobei die angeforderten Daten Teile des mehrteiligen Dokuments betreffen, wobei das System aufweist:
einen ersten Hash-Wert-Generator zum Erzeugen (41) eines ersten Hash-Wertes der in der ersten Datenverarbeitungseinrichtung (1) gespeicherten Daten durch Erzeugen eines ersten Paares von Hash-Werten der in der ersten Datenverarbeitungseinrichtung (1) gespeicherten Daten, wobei das Paar von ersten Hash-Werten durch jeweiliges Anwenden einer Hash-Funktion auf einen einheitlichen Ressourcenanzeiger "URL" und auf ein Datenattribut, das von der ersten Datenverarbeitungseinrichtung (1) angefordert wird, erzeugt wird;
einen zweiten Hash-Wert-Generator zum Erzeugen (43) eines zweiten Hash-Werts der von der zweiten Datenverarbeitungseinrichtung (9) angeforderten Daten, die den in der ersten Datenverarbeitungseinrichtung (1) gespeicherten Daten entsprechen, durch Erzeugen eines zweiten Paares von angeforderten Hash-Werten von der zweiten Datenverarbeitungseinrichtung (9) entsprechend den Daten, die in der ersten Datenverarbeitungseinrichtung (1) gespeichert sind, wobei das zweite Paar von Hash-Werten durch jeweiliges Anwenden einer Hash-Funktion auf einen entsprechenden URL und auf ein entsprechendes in der zweiten Datenverarbeitungseinrichtung (9) gespeichertes Datenattribut erzeugt wird;
einen Vergleicher zum Vergleichen (45) des ersten Hash-Werts mit dem zweiten Hash-Wert durch Vergleichen des ersten Paares von Hash-Werten mit dem zweiten Paar von Hash-Werten bei der zweiten Datenverarbeitungseinrichtung (9), Detektieren (49) einer Zustandsänderung in dem Fall eines Unterschieds zwischen den Hash-Werten, und Übertragen der von der zweiten Datenverarbeitungseinrichtung (9) angeforderten Daten an die erste Datenverarbeitungseinrichtung (1) in dem Fall, dass der erste Hash-Wert und der zweite Hash-Wert unterschiedlich sind; und
einen Detektor zum Detektieren, dass der Hash-Wert des entsprechenden Datenattributs, das in der zweiten Datenverarbeitungseinrichtung (9) gespeichert ist, mit dem Hash-Wert eines Cache-Eintrags des Datenattributs in der ersten Datenverarbeitungseinrichtung (1) übereinstimmt, Detektieren, dass der Hash-Wert des entsprechenden in der zweiten Datenverarbeitungseinrichtung (9) gespeicherten URL nicht mit dem Hash-Wert eines Cache-Eintrags des URL in der ersten Datenverarbeitungseinrichtung (1) übereinstimmt, und Senden einer eingebetteten Antwort von der zweiten Datenverarbeitungseinrichtung (9) an die erste Berechnung Einrichtung (1), wobei die eingebettete Antwort einen Hypertextübertragungsprotokoll- "HTTP" Header ohne das entsprechende Datenattribut aufweist, wobei ein Wert des "HTTP"-Headers der Hash-Wert des entsprechenden in dem zweiten Datenverarbeitungseinrichtung (9) gespeicherten Datenattributs ist.

14. Computerlesbares Medium, das computerlesbare Anweisungen speichert, die durch einen Prozessor eines Datenverarbeitungssystems ausführbar sind, um zu bewirken, dass das System die Schritte des Verfahrens nach einem der Ansprüche 1 bis 12 implementiert.

## Revendications

1. Procédé de détection de changements d'état entre des données stockées dans un premier dispositif informatique (1) et des données demandées à partir d'un deuxième dispositif informatique (9), le deuxième dispositif informatique (9) étant configuré pour transmettre un document en plusieurs parties en réponse à une demande provenant du premier dispositif informatique (1), les données demandées se rapportant à des parties du document en plusieurs parties, le procédé consistant à :
générer (41) une première valeur de hachage desdites données stockées dans ledit premier dispositif informatique (1) en générant une première paire de valeurs de hachage desdites données stockées dans ledit premier dispositif informatique (1), où ladite première paire de valeurs de hachage est générée en appliquant respectivement une fonction de hachage sur un localisateur de ressources uniforme 'URL' et sur un attribut de données demandés par ledit premier dispositif informatique (1) ;
transmettre ladite première valeur de hachage dudit premier dispositif informatique (1) audit deuxième dispositif informatique (9) ;
générer (43) une deuxième valeur de hachage desdites données demandées audit deuxième dispositif informatique (9) correspondant auxdites données stockées dans ledit premier dispositif informatique (1) en générant une deuxième paire de valeurs de hachage de données demandées audit deuxième dispositif informatique (9) correspondant auxdites données stockées dans ledit premier dispositif informatique (1), où ladite deuxième paire de valeurs de hachage est générée en appliquant respectivement une fonction de hachage sur un URL correspondant et sur un attribut de données correspondant stockés au niveau dudit deuxième dispositif informatique (9) ;
comparer (45) ladite première valeur de hachage à ladite deuxième valeur de hachage au niveau dudit deuxième dispositif informatique (9) en comparant ladite première paire de valeurs de hachage à ladite deuxième paire de valeurs de hachage au niveau dudit deuxième dispositif informatique (9), détecter (49) un changement d'état en cas d'une différence entre lesdites valeurs de hachage, et transmettre lesdites données demandées dudit deuxième dispositif informatique (9) audit premier dispositif informatique (1) dans le cas où ladite première valeur de hachage et ladite deuxième valeur de hachage sont différentes ; et
détecter que la valeur de hachage dudit attribut de données correspondant stocké au niveau dudit deuxième dispositif informatique (9) correspond à la valeur de hachage d'une entrée de mémoire cache dudit attribut de données dans ledit premier dispositif informatique (1), détecter que la valeur de hachage dudit URL correspondant stocké au niveau dudit deuxième dispositif informatique (9) ne correspond pas à la valeur de hachage d'une entrée de mémoire cache dudit URL dans ledit premier dispositif informatique (1), et envoyer une réponse incluse dudit deuxième dispositif informatique (9) audit premier dispositif informatique (1), la réponse incluse comprenant un en-tête de protocole de transfert hypertexte 'HTTP' sans ledit attribut de données correspondant, une valeur de l'en-tête 'HTTP' étant la valeur de hachage dudit attribut de données correspondant stocké au niveau dudit deuxième dispositif informatique (9).

2. Procédé de la revendication 1, dans lequel ladite première valeur de hachage représente des informations d'état dudit premier dispositif informatique (1) et ladite deuxième valeur de hachage représente lesdites données demandées audit deuxième dispositif informatique (9) correspondant auxdites données stockées dans ledit premier dispositif informatique (1).

3. Procédé de l'une quelconque des revendications 1 et 2, consistant en outre à incorporer ladite première valeur de hachage dans un message d'état de transition dudit premier dispositif informatique (1) audit deuxième dispositif informatique (9).

4. Procédé de l'une quelconque des revendications précédentes, dans lequel ladite première valeur de hachage est générée en exécutant une fonction de hachage sur un localisateur de ressources uniforme 'URL' demandé par ledit premier dispositif informatique (1), et ladite deuxième valeur de hachage est générée en exécutant une fonction de hachage sur un URL correspondant stocké au niveau dudit deuxième dispositif informatique (9).

5. Procédé de l'une quelconque des revendications 1 à 3, dans lequel ladite première valeur de hachage est générée en exécutant une fonction de hachage sur un attribut de données demandé par ledit premier dispositif informatique (1), et ladite deuxième valeur de hachage est générée en exécutant une fonction de hachage sur un attribut de données correspondant stocké au niveau dudit deuxième dispositif informatique (9).

6. Procédé de la revendication 1, dans lequel ladite première paire de valeurs de hachage représente des informations d'état concernant un document stocké dans ledit premier dispositif informatique (1) et ladite deuxième paire de valeurs de hachage représente lesdites données demandées audit deuxième dispositif informatique (9) correspondant auxdites données stockées dans ledit premier dispositif informatique (1).

7. Procédé de la revendication 1 ou 6, consistant en outre à transmettre ladite première paire de valeurs de hachage dudit premier dispositif informatique (1) audit deuxième dispositif informatique (9), et transmettre lesdites données demandées dudit deuxième dispositif informatique (9) audit premier dispositif informatique (1) seulement dans le cas où ladite première paire de valeurs de hachage diffère de ladite deuxième paire de valeurs de hachage.

8. Procédé de l'une quelconque des revendications 1, 6 et 7, consistant en outre à incorporer ladite première paire de valeurs de hachage dans un message d'état de transition dudit premier dispositif informatique (1) audit deuxième dispositif informatique (9).

9. Procédé de la revendication 1, consistant en outre à recevoir ladite réponse incluse dans ledit premier dispositif informatique (1), détecter ledit en-tête et localiser, en réponse, une première entrée de mémoire cache avec ladite valeur de hachage dudit attribut de données correspondant dans ledit premier dispositif informatique (1), et créer ou mettre à jour une autre entrée de mémoire cache pour ledit URL avec des données correspondant à ladite valeur de hachage dudit attribut de données correspondant par copie à partir de ladite première entrée de mémoire cache.

10. Procédé de la revendication 1 ou 9, consistant en outre à localiser une première entrée de mémoire cache avec ladite valeur de hachage dudit attribut de données correspondant dans ledit deuxième dispositif informatique (9), et créer ou mettre à jour une autre entrée de mémoire cache pour ledit URL avec des données correspondant à ladite valeur de hachage dudit attribut de données correspondant par copie à partir de ladite première entrée de mémoire cache.

11. Procédé de la revendication 1, consistant en outre à détecter que la valeur de hachage dudit attribut de données correspondant stocké au niveau dudit deuxième dispositif informatique (9) ne correspond pas à la valeur de hachage d'une entrée de mémoire cache dudit attribut de données dans ledit premier dispositif informatique (1), et envoyer une réponse incluse dudit deuxième dispositif informatique (9) audit premier dispositif informatique (1) pour mettre à jour lesdites données correspondantes extraites dudit deuxième dispositif informatique (9), où ladite réponse incluse comporte l'attribut de données correspondant extrait dudit deuxième dispositif informatique (9).

12. Procédé de l'une quelconque des revendications 1 et 6 à 11, dans lequel lesdites première et deuxième valeurs de hachage sont générées en utilisant des fonctions de hachage choisies dans un groupe comprenant MD2, MD5 et SHA-1.

13. Système de détection de changements d'état entre des données stockées dans un premier dispositif informatique (1) et des données demandées à un deuxième dispositif informatique (9), le deuxième dispositif informatique (9) étant configuré pour transmettre un document en plusieurs parties en réponse à une demande provenant du premier dispositif informatique (1), les données demandées se rapportant à des parties du document en plusieurs parties, le système comprenant :
un générateur de première valeur de hachage destiné à générer (41) une première valeur de hachage desdites données stockées dans ledit premier dispositif informatique (1) en générant une première paire de valeurs de hachage desdites données stockées dans ledit premier dispositif informatique (1), où ladite première paire de valeurs de hachage est générée en appliquant respectivement une fonction de hachage sur un localisateur de ressources uniforme 'URL' et sur un attribut de données demandés par ledit premier dispositif informatique (1) ;
un générateur de deuxième valeur de hachage destiné à générer (43) une deuxième valeur de hachage desdites données demandées audit deuxième dispositif informatique (9) correspondant auxdites données stockées dans ledit premier dispositif informatique (1) en générant une deuxième paire de valeurs de hachage des données demandées audit deuxième dispositif informatique (9) correspondant auxdites données stockées dans ledit premier dispositif informatique (1), où ladite deuxième paire de valeurs de hachage est générée en appliquant respectivement une fonction de hachage sur un URL correspondant et sur un attribut de données correspondant stockés au niveau dudit deuxième dispositif informatique (9);
un comparateur destiné à comparer (45) ladite première valeur de hachage à ladite deuxième valeur de hachage en comparant ladite première paire de valeurs de hachage à ladite deuxième paire de valeurs de hachage au niveau dudit deuxième dispositif informatique (9), détecter (49) un changement d'état en cas d'une différence entre lesdites valeurs de hachage, et transmettre lesdites données demandées dudit deuxième dispositif informatique (9) audit premier dispositif informatique (1) dans le cas où ladite première valeur de hachage et ladite deuxième valeur de hachage sont différentes ; et
un détecteur destiné à détecter que la valeur de hachage dudit attribut de données correspondant stocké au niveau dudit deuxième dispositif informatique (9) correspond à la valeur de hachage d'une entrée de mémoire cache dudit attribut de données dans ledit premier dispositif informatique (1), détecter que la valeur de hachage dudit URL correspondant stocké au niveau dudit deuxième dispositif informatique (9) ne correspond pas à la valeur de hachage d'une entrée de mémoire cache dudit URL dans ledit premier dispositif informatique (1), et envoyer une réponse incluse dudit deuxième dispositif informatique (9) audit premier dispositif informatique (1), la réponse incluse comprenant un en-tête de protocole de transfert hypertexte 'HTTP' sans ledit attribut de données correspondant, une valeur de l'en-tête 'HTTP' étant la valeur de hachage dudit attribut de données correspondant stocké au niveau dudit deuxième dispositif informatique (9).

14. Support lisible par ordinateur stockant des instructions lisibles par ordinateur pouvant être exécutées par un processeur d'un système informatique pour amener ledit système à mettre en oeuvre les étapes du procédé de l'une quelconque des revendications 1 à 12.
